# EUROPEAN PATENT APPLICATION

(11) **EP 4 510 678 A1**
(43) Date of publication of application: **19.02.2025**
(21) Application number: 22936968.1
(22) Date of filing: 15.04.2022
(51) Int. Cl.: H04W 24/02

(54) **WLAN SENSING MEASUREMENT METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/087196
(87) International publication number: WO 2023/197323

(57) **Abstract**

Embodiments of the present disclosure relate to the technical field of mobile communications, and provide a WLAN sensing measurement method and apparatus, an electronic device, and a storage medium. The WLAN sensing measurement method comprises: sending a poll frame, and determining a first resource parameter of an uplink resource of a WLAN sensing measurement process; sending a first trigger frame, and determining a second resource parameter of a sensing response end participating in triggering a sensing measurement process TF sounding; and determining, according to the first resource parameter and/or the second resource parameter, whether to send a second trigger frame, wherein the second trigger frame and the first trigger frame correspond to the same sensing measurement establishment identifier. The embodiments of the present disclosure provide a mode for indicating whether to send a trigger frame for multiple times to perform uplink sensing measurement.

## Description

### TECHNICAL FIELD

The embodiments of the present disclosure relate to the field of mobile communication technologies and in particular to a WLAN sensing measurement method and apparatus, an electronic device and a storage medium.

### BACKGROUND

Along with the rapid development of mobile communication technologies, wireless fidelity (Wi-Fi) technology has made great progress in the aspects such as transmission rate and throughput and the like. At present, the research contents of the Wi-Fi technology include, for example, bandwidth transmission of 320Mhz, and aggregation and synergy of multiple frequency bands and the like, and its main application scenarios include, for example, video transmission, augmented reality (AR), and virtual reality (VR) and the like.

In the current Wi-Fi technology under research, it is possible to support wireless local area network (WLAN) sensing technology, for example, in the application scenarios such as position discovery, proximity detection and presence detection and the like in a dense environment (e.g. home environment and enterprise environment).

The WLAN sensing measurement process usually includes a triggered based sounding (TB) mode and a non-TB based sensing mode. In the TB-Based mode, an access point (AP) is an initiator or transmitter; and in the non-TB based mode, a station (STA) is an Initiator or Transmitter. Specifically, in the TB-Based scenario, there may be a case in which a trigger frame is repeated. Therefore, it is necessary to provide a manner indicating whether to transmit a trigger frame multiple times to perform uplink sensing measurement so as to perfect the TB-Based sensing measurement process.

### SUMMARY

**One** or more embodiments of the present disclosure provide Wireless Local Area Network (WLAN) sensing measurement methods and apparatuses, electronic devices and a storage medium, so as to provide a manner indicating whether to transmit a trigger frame multiple times to perform uplink sensing measurement.

According to an aspect of the embodiments of the present disclosure, there is provided a wireless local area network (WLAN) sensing measurement method, performed by a sensing initiator, and including:
transmitting a polling frame and determining a first resource parameter of an uplink resource for a WLAN sensing measurement process;
transmitting a first trigger frame and determining a second resource parameter of one or more sensing responders participating in trigger frame (TF) sounding; and
based on at least one of the first resource parameter or the second resource parameter, determining whether to transmit a second trigger frame, where the second trigger frame and the first trigger frame correspond to a same sensing measurement setup identifier.

According to another aspect of the embodiments of the present disclosure, there is provided a wireless local area network (WLAN) sensing measurement method, performed by a sensing transmitter, and including:
receiving a polling frame and a first trigger frame; and
receiving a second trigger frame, where the second trigger frame is determined and transmitted by a sensing initiator based on at least one of a first resource parameter or a second resource parameter, the first resource parameter is a first resource parameter of an uplink resource for a WLAN sensing measurement process, and the second resource parameter is a second resource parameter of one or more sensing responders participating in trigger frame (TF) sounding;
where the second trigger frame and the first trigger frame correspond to a same sensing measurement setup identifier.

According to yet another aspect of the embodiments of the present disclosure, there is provided an electronic device, being a sensing initiator and including:
**a** first transmitting module, configured to transmit a polling frame and determine a first resource parameter of an uplink resource for a WLAN sensing measurement process;
**a** second transmitting module, configured to transmit a first trigger frame and determine a second resource parameter of one or more sensing responders participating in trigger frame (TF) sounding; and
**a** determination module, configured to, based on at least one of the first resource parameter or the second resource parameter, determine whether to transmit a second trigger frame, where the second trigger frame and the first trigger frame correspond to a same sensing measurement setup identifier.

According to still another aspect of the embodiments of the present disclosure, there is provided an electronic device, being a sensing responder, and including:
a first receiving module, configured to receive a polling frame and a first trigger frame; and
a second receiving module, configured to receive a second trigger frame, where the second trigger frame is determined and transmitted by a sensing initiator based on at least one of a first resource parameter or a second resource parameter, the first resource parameter is a first resource parameter of an uplink resource for a WLAN sensing measurement process, and the second resource parameter is a second resource parameter of one or more sensing responders participating in trigger frame (TF) sounding;
where the second trigger frame and the first trigger frame correspond to a same sensing measurement setup identifier.

According to still another aspect of the embodiments of the present disclosure, there is provided a WLAN sensing measurement apparatus, applied to a sensing initiator and including:
a first transmitting module, configured to transmit a polling frame and determine a first resource parameter of an uplink resource for a WLAN sensing measurement process;
a second transmitting module, configured to transmit a first trigger frame and determine a second resource parameter of one or more sensing responders participating in trigger frame (TF) sounding; and
**a** determination module, configured to, based on at least one of the first resource parameter or the second resource parameter, determine whether to transmit a second trigger frame, where the second trigger frame and the first trigger frame correspond to a same sensing measurement setup identifier.

According to still another aspect of the embodiments of the present disclosure, there is provided a WLAN sensing measurement apparatus, applied to a sensing responder, and including:
a first receiving module, configured to receive a polling frame and a first trigger frame; and
a second receiving module, configured to receive a second trigger frame, where the second trigger frame is determined and transmitted by a sensing initiator based on at least one of a first resource parameter or a second resource parameter, the first resource parameter is a first resource parameter of an uplink resource for a WLAN sensing measurement process, and the second resource parameter is a second resource parameter of one or moresensing responders participating in trigger frame (TF) sounding;
where the second trigger frame and the first trigger frame correspond to a same sensing measurement setup identifier.

According to still another aspect of the embodiments of the present disclosure, there is provided an electronic device, including a processor and a memory storing computer programs executable by the processor; where the computer programs, when executed by the processor, cause the processor to perform any one of the methods in the embodiments of the present disclosure.

According to still another aspect of the embodiments of the present disclosure, there is provided a computer-readable storage medium, storing computer programs thereon, where the computer programs, when executed by a processor, cause the processor to perform any one of the methods in the embodiments of the present disclosure.

In the embodiments of the present disclosure, a sensing initiator: transmits a polling frame and determines a first resource parameter of an uplink resource for a WLAN sensing measurement process; transmits a first trigger frame and determines a second resource parameter of one or more sensing responders participating in TF sounding; based on the first resource parameter and/or the second resource parameter, determines whether to transmit a second trigger frame. The embodiments of the present disclosure provide a manner indicating whether to transmit a trigger frame multiple times to perform an uplink sensing measurement, so as to perfect a TB-Based sensing measurement process.

The additional aspects and advantages of the embodiments of the present disclosure will be partly given in the following descriptions and will become apparent from the following descriptions or be known by practicing the present disclosure.

### BRIEF DESCRIPTION OF THE DRAWINGS

In order to describe the technical solutions of the present disclosure more clearly, the drawings required for descriptions of the embodiments of the present disclosure will be briefly introduced. Apparently, the drawings described hereunder are only some embodiments of the present disclosure. Those skilled in the arts can also obtain other drawings based on these drawings without carrying out creative work.
FIG. 1 is a flowchart illustrating a WLAN sensing measurement method according to an embodiment of the present disclosure.
FIG. 2 is a schematic diagram illustrating a first example according to one or more embodiments of the present disclosure.
FIG. 3 is another schematic diagram illustrating a first example according to one or more embodiments of the present disclosure.
FIG. 4 is yet another schematic diagram illustrating a first example according to one or more embodiments of the present disclosure.
**FIG.** 5 is a schematic diagram illustrating a second example according to one or more embodiments of the present disclosure.
FIG. 6 is a schematic diagram illustrating a third example according to one or more embodiments of the present disclosure.
FIG. 7 is a flowchart illustrating a WLAN sensing measurement method according to another embodiment of the present disclosure.
FIG. 8 is a flowchart illustrating a WLAN sensing measurement method according to yet another embodiment of the present disclosure.
FIG. 9 is a flowchart illustrating a WLAN sensing measurement method according to still another embodiment of the present disclosure.
FIG. 10 is a structural schematic diagram illustrating a WLAN sensing measurement apparatus according to an embodiment of the present disclosure.
FIG. 11 is a structural schematic diagram illustrating a WLAN sensing measurement apparatus according to another embodiment of the present disclosure.
FIG. 12 is a structural schematic diagram illustrating an electronic device according to an embodiment of the present disclosure.

### DETAILED DESCRIPTION OF THE EMBODIMENTS

The wording "and/or" in the present disclosure describes an association relationship of an associated object, and indicates that three relationships may exist, e.g., A and/or B, which may be expressed as: A alone, both A and B, and B alone. The character "/" generally indicates an "or" relationship between the related objects.

The wording "plurality" in the present disclosure means two or more, and other quantifiers are similar.

Examples will be described in detail herein, with the illustrations thereof represented in the drawings. Where the following description relates to the drawings, unless otherwise indicated, the same numerals in different drawings represent the same or similar elements. Implementations described in the following examples do not represent all implementations consistent with the present disclosure. On the contrary, they are examples of an apparatus and a method consistent with some aspects of the present disclosure described in detail in the appended claims.

The terminology used herein is for the purpose of describing particular embodiments only and is not intended to be limiting of the present disclosure. As used herein, the singular forms "a", "said" and "the" are intended to include the plural forms as well, unless the context clearly indicates otherwise. It will also be understood that as used herein, the term "and/or" is and includes any or all combinations of one or more of the associated listed items.

**It** will be understood that while terms such as "first", "second", "third", etc. may be used to describe to describe various information, such information should not be limited to these terms. These terms are used only to distinguish the same type of information from each other. For example, without departing from the scope of the present disclosure, a first information may also be referred to as a second information, and similarly, a second information may also be referred to as a first information. Depending on the context, as used herein, the wording "if' may be interpreted as "while ..." or "when ..." or "in response to a determination".

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

**One** or more embodiments of the present disclosure provide wireless local area network (WLAN) sensing measurement methods and apparatuses, electronic devices and a storage medium, so as to provide a manner indicating whether to transmit a trigger frame multiple times to perform uplink sensing measurement.

The methods and apparatuses are based on a same application idea and hence the methods and apparatuses solve problems based on similar principle. Therefore, reference may be made to each other for the implementation of the methods and apparatuses, with those same parts not repeated.

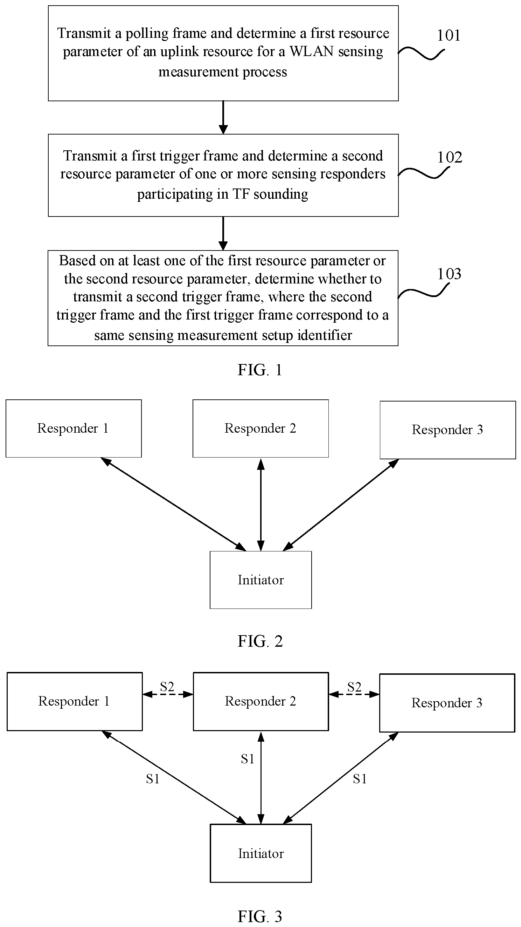

As shown in FIG. 1, an embodiment of the present disclosure provides a WLAN sensing measurement method. The method may be applied to an electronic device which may be a network device, for example, a sensing initiator. Specifically, the method may include the following steps 101 to 103.

At step 101, a polling frame is transmitted and a first resource parameter of an uplink resource for a WLAN sensing measurement process is determined.

As a first example, as shown in FIGS. 2 to 4, a WLAN sensing architecture and WLAN sensing process to which the WLAN sensing measurement method provided by the embodiments of the present disclosure is applied are described firstly.

**FIG.** 2 is an architecture diagram illustrating a WLAN Sensing process. When a sensing initiator (or initiator) initiates WLAN Sensing (for example, initiate WLAN sensing session), it is possible that multiple sensing responders (or sensing receivers) or responders make response, for example, a Responder 1, a Responder 2 and a Responder 3 as shown in FIG. 2 make response. When the sensing initiator initiates WLAN Sensing, multiple associated or non-associated WLAN sensing responders may make response.

With reference to FIG. 3, the sensing initiator communicates with the sensing responder by communication connection, for example, by communication connection S1; communication between the sensing responders is carried out by communication connection S2.

Each sensing initiator may be a client; and each sensing responder (in this example, the sensing responder 1 to the sensing responder 3) may be a station (STA) or an access point (AP). Besides, the STA and the AP may undertake multiple roles in the WLAN sensing process. For example, in the WLAN sensing process, the STA may also serve as a sensing initiator, and the sensing initiator may be a sensing transmitter or a sensing receiver or both or neither of them. In the WLAN sensing process, the sensing responder may also be a sensing transmitter or a sensing receiver or both of them.

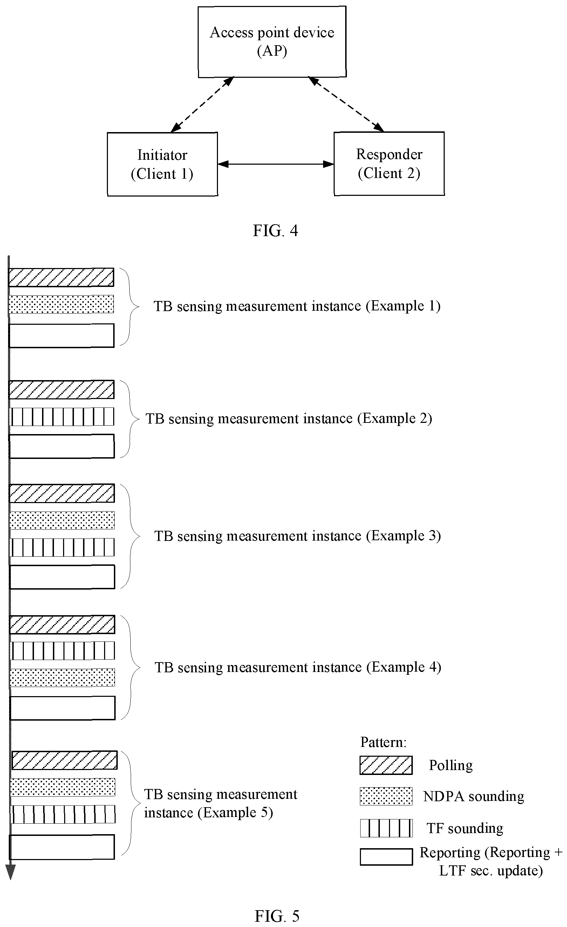

As another architecture, as shown in FIG. 4, the sensing initiator and the sensing responder may also be clients and both of them may communicate by connecting a same AP. In FIG. 4, a Client 1 is a sensing initiator and a Client 2 is a sensing responder.

As a second example, FIG. 5 illustrates multiple sensing measurement instances of one sensing measurement process of TB-Based. In the examples 1 to 5, the sensing measurement process includes polling, sensing measurement process and reporting (Reporting + Long Training Field (LTF) sec. update) process. In each example, the sensing measurement process may only include null data packet announcement (NDPA) sounding (downlink sensing measurement) or trigger frame (TF) Sounding (uplink sensing measurement), or may include both of them at the same time.

With a TF trigger stage of a TB-Based scenario as example, the AP as a sensing receiver requests null data packet (NDP) frames from one or more STAs to perform sensing measurement. If at least one STA serving as sensing transmitter makes response in the polling stage, the TF trigger stage is present in the TB-Based sensing measurement instance.

With a sensing initiator AP as example, the AP transmits a polling frame to one or more STAs to wake up all sensing responders participating in sensing measurement; these STAs serve as sensing transmitters and make response in the polling stage of the TB-Based sensing measurement instance to request R2I NDP transmission, i.e. uplink NDP frame. After transmitting the polling frame, the sensing initiator determines a first resource parameter of an uplink resource configured for this WLAN sensing measurement process. The first resource parameter includes, for example, a spatial stream (SS) number supported by the sensing initiator and the like, and the first resource parameter is used to determine a maximum number of the sensing responders participating in the sensing measurement. For example, when the SS number supported by the sensing initiator is determined, a maximum number of the sensing responders supported may be determined based on the SS number configured for each sensing responder in a subsequent trigger frame. For example, if the SS number supported by the AP is 8 and the SS number configured for each sensing responder in the trigger frame is 2, the maximum number of the supported sensing responders is 4.

At step 102, a first trigger frame is transmitted and a second resource parameter of one or more sensing responders participating in TF sounding is determined.

The sensing initiator transmits the polling frame to wake up the sensing responders participating in the sensing measurement and then transmits a trigger frame, i.e. the first trigger frame. Under normal circumstances, the trigger frame in the sensing measurement process should allocate an uplink (or connection) resource for R2I NDP transmission to the sensing responders. Thus, the first trigger frame transmitted by the sensing initiator should cover one or more STAs in the full band width. The sensing responder addressed by the User Info field in the first trigger frame may, after receiving the first trigger frame, transmit NDP short interframe space (SIFS) to participate in the sensing measurement.

After transmitting the first trigger frame, the sensing initiator determines the second resource parameter of the sensing responders participating in TF sounding (trigger the uplink sensing measurement process); the second resource parameter includes, for example, the SS number transmitted by the sensing responders or uplink bandwidth (UL BW) information of the sensing responders in the measurement instance corresponding to a same measurement setup identifier.

At step 103, based on the first resource parameter and/or the second resource parameter, whether to transmit a second trigger frame is determined; where the second trigger frame and the first trigger frame correspond to a same sensing measurement setup identifier.

Based on the first resource parameter and/or the second resource parameter, whether to transmit the second trigger frame is determined. It can be understood that the first trigger frame and the second trigger frame are both trigger frames used to trigger TF sounding; after the first trigger frame is transmitted once, whether to transmit the second trigger frame is determined, namely, it is determined whether a trigger frame corresponding to a same WLAN sensing measurement setup identifier (ID) is also transmitted to allocate resources for the sensing responders to perform UL sounding sensing.

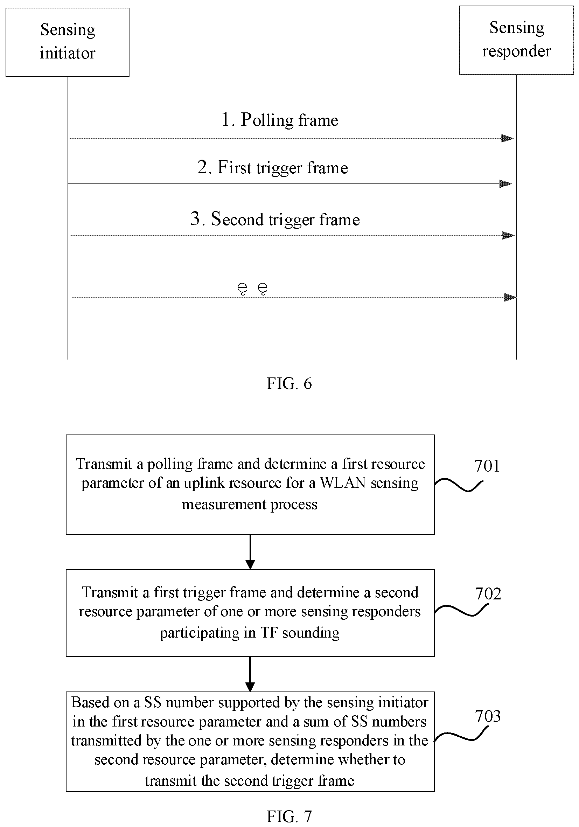

As a third example, as shown in FIG. 6, the sensing initiator firstly performs the first step in which the polling frame is transmitted to one or more sensing responders to wake up all sensing responders participating in sensing measurement; and then performs the second step in which the first trigger frame is transmitted to the sensing responders and it is determined whether the uplink resource satisfies the resource requirement of the sensing responders waked up by the polling frame.

Specifically, whether the uplink resource satisfies the resource requirement of the sensing responders waked up by the polling frame may be determined based on the first resource parameter and/or the second resource parameter. For example, based on the first resource parameter, a number of the sensing responders waked up by the polling frame is determined, and based on the second resource parameter, a number of the responders participating in the sensing measurement is determined. When the number of the sensing responders participating in the sensing measurement is less than or equal to the number of the sensing responders waked up by the polling frame, it is determined that the uplink resource does not satisfy the resource requirement of the sensing responders waked up by the polling frame. At this time, the sensing initiator performs the third step in which the second trigger framer is to be transmitted to continue the TF Sounding process.

**In** an embodiment of the present disclosure, a polling frame is transmitted and a first resource parameter of the uplink resource of the WLAN sensing measurement process is determined; a first trigger frame is transmitted and a second resource parameter of the sensing responders participating in TF sounding is determined; based on the first resource parameter and/or the second resource parameter, whether to transmit a second trigger frame is determined. An embodiment of the present disclosure provides a manner indicating whether to transmit the trigger frame multiple times to perform uplink sensing measurement so as to perfect TB-Based sensing measurement process.

With reference to FIG. 7, an embodiment of the present disclosure further provides a WLAN sensing measurement method. The method may be applied to an electronic device which may be a network device, for example, a sensing initiator. Specifically, the method may include the following steps 701 to 703.

At step 701, a polling frame is transmitted and a first resource parameter of an uplink resource for a WLAN sensing measurement process is determined.

For the WLAN sensing architecture and the WLAN sensing process to which the WLAN sensing measurement method provided by the embodiments of the present disclosure is applied, reference may be made to the first example, and for the TB-Based sensing measurement process, to the second example. No redundant descriptions are made herein.

With a TF trigger stage of a TB-Based scenario as example, the AP as a sensing receiver requests NDP frames from one or more STAs to perform sensing measurement. If at least one STA serving as sensing transmitter makes response in the polling stage, the TF trigger stage is present in the TB-Based sensing measurement instance.

With a sensing initiator AP as example, the AP transmits a polling frame to one or more STAs to wake up all sensing responders participating in sensing measurement; these STAs serve as sensing transmitters and make response in the polling stage of the TB-Based sensing measurement instance to request R2I NDP transmission. After transmitting the polling frame, the sensing initiator determines a first resource parameter of an uplink resource configured for this WLAN sensing measurement process. The first resource parameter includes, for example, the SS number supported by the sensing initiator and the like.

At step 702, a first trigger frame is transmitted and a second resource parameter of a sensing responder participating in TF sounding is determined.

The sensing initiator transmits the polling frame to wake up all sensing responders participating in sensing measurement and then transmits a trigger frame, i.e. the first trigger frame. Under normal circumstances, the trigger frame in the sensing measurement process should allocate an uplink (or connection) resource for R2I NDP transmission to the sensing responders. Thus, the first trigger frame transmitted by the sensing initiator should cover one or more STAs in the full band width. The sensing responder addressed by the User Info field in the first trigger frame may, after receiving the first trigger frame, transmit NDP SIFS to participate in the sensing measurement.

After transmitting the first trigger frame, the sensing initiator determines the second resource parameter of the sensing responders participating in TF sounding; the second resource parameter includes, for example, the SS number transmitted by the sensing responders.

At step 703, based on a spatial stream (SS) number supported by the sensing initiator in the first resource parameter and a sum of SS numbers transmitted by the sensing responders in the second resource parameter, whether to transmit a second trigger frame is determined.

Based on the SS number supported by the sensing initiator in the first resource parameter and the sum of SS numbers transmitted by the sensing responders in the second resource parameter, whether to transmit the second trigger frame is determined. The sum of SS numbers transmitted by the sensing responders is a sum of the SS numbers of all sensing responders. It can be understood that the first trigger frame and the second trigger frame are both trigger frames used to trigger TF sounding. After the first trigger frame is transmitted once, whether to transmit the second trigger frame is determined, namely, it is determined whether a trigger frame corresponding to a same WLAN sensing measurement setup identifier (ID) is also transmitted to allocate resources for the sensing responders to perform UL sounding sensing.

Specifically, when the SS number supported by the sensing initiator is determined, whether the uplink resource satisfies the resource requirement of the sensing responders waked up by the polling frame is determined based on the sum of SS numbers transmitted by the sensing responders in the second resource parameter. For example, the SS number supported by the AP is eight, eight sensing responders are waked up by polling frame, and the SS number configured for each sensing responder is two in the trigger frame. In this case, the maximum number of the sensing responders supported by the AP is four. It can be determined that the uplink resource does not satisfy the resource requirement of the sensing responders waked up by the polling frame. At this time, the second trigger frame is to be transmitted to continue the TF sounding process.

Specifically, in an embodiment of the present disclosure, the step 703 includes the following steps: when the SS number is less than the sum of SS numbers, it is determined that the uplink resource does not satisfy the resource requirement of the sensing responders waked up by the polling frame, and at this time, the second trigger frame is transmitted; conversely, when the SS number is greater than or equal to the sum of SS numbers, the second trigger frame is not transmitted.

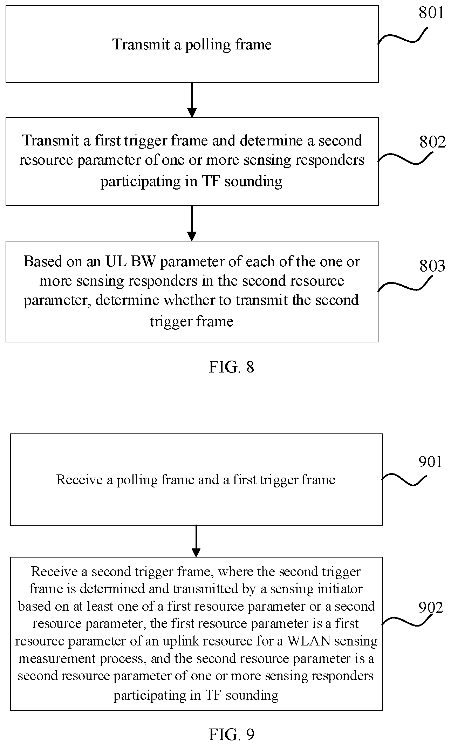

As shown in FIG. 8, an embodiment of the present disclosure further provides a WLAN sensing measurement method. The method may be applied to an electronic device which may be a network device, for example, a sensing initiator. Specifically, the method may include the following steps 801 to 803.

At step 801, a polling frame is transmitted.

For the WLAN Sensing architecture and the WLAN Sensing process to which the WLAN sensing measurement method provided by the embodiments of the present disclosure is applied, reference may be made to the first example, and for the TB-Based sensing measurement process, to the second example. No redundant descriptions are made herein.

With a TF trigger stage of a TB-Based scenario as example, the AP as a sensing receiver requests NDP frames from one or more STAs to perform sensing measurement. If at least one STA serving as sensing transmitter makes response in the polling stage, the TF trigger stage is present in the TB-Based sensing measurement instance.

With a sensing initiator AP as example, the AP transmits a polling frame to one or more STAs to wake up all sensing responders participating in sensing measurement; these STAs serve as sensing transmitters and make response in the polling stage of the TB-Based sensing measurement instance to request R2I NDP transmission.

At step 802, a first trigger frame is transmitted and a second resource parameter of the sensing responders participating in TF sounding is determined.

The sensing initiator transmits the polling frame to wake up all sensing responders participating in sensing measurement and then transmits a trigger frame, i.e. the first trigger frame. Under normal circumstances, the trigger frame in the sensing measurement process should allocate an uplink (or connection) resource for R2I NDP transmission to the sensing responders. Thus, the first trigger frame transmitted by the sensing initiator should cover one or more STAs in the full band width. The sensing responder addressed by the User Info field in the first trigger frame may, after receiving the first trigger frame, transmit NDP SIFS to participate in the sensing measurement.

After transmitting the first trigger frame, the sensing initiator determines the second resource parameter of the sensing responders participating in TF sounding; the second resource parameter includes, for example, uplink bandwidth (UL BW) information of the sensing responders in the measurement instance corresponding to a same measurement setup identifier.

At step 803, based on the UL BW parameter of each of one or more sensing responders in the second resource parameter, whether to transmit a second trigger frame is determined.

Based on the UL BW parameter of the sensing responder in the second resource parameter, whether to transmit the second trigger frame is determined. It can be understood that the first trigger frame and the second trigger frame are both trigger frames used to trigger TF sounding; after the first trigger frame is transmitted once, whether to transmit the second trigger frame is determined, namely, it is determined whether a trigger frame corresponding to a same sensing measurement setup identifier (ID) is also transmitted to allocate resources for the sensing responders to perform UL sounding sensing.

Specifically, the communication bandwidth of the first trigger frame (e.g. the uplink communication bandwidth UL BW) is 80MHZ, and the UL BW of the sensing responder in the sensing measurement instance includes 80MHZ and 160 MHZ, and thus, the communication bandwidth of the first trigger frame cannot fully cover the UL BW of all sensing responders. Therefore, the second trigger frame is to be transmitted to perform TF sounding process.

In an embodiment of the present disclosure, based on the UL BW parameter of the sensing responder in the second resource parameter, whether to transmit the second trigger frame is determined, which includes the followings: based on the UL BW parameter of the sensing responder, in response to determining that the sensing responder includes at least two UL BW parameters in the sensing measurement instance of the WLAN sensing measurement process, the second trigger frame is transmitted; some sensing responders may have different UL BWs in the measurement instance corresponding to a same measurement setup identifier, the UL sounding sensing measurement may be triggered by transmitting different TF frames; for example, in the two sensing measurement instances of measurement setup ID-1, the sensing responder STA1 respectively includes two UL BWs, i.e. 80MHZ and 160 MHZ, and thus the sensing initiator needs to transmit two trigger frames of 80MHZ and 160 MHZ respectively to fully cover the UL BWs of the STA1; based on the UL BW parameter of the sensing responder, in response to determining that the sensing responder includes one UL BW parameter in the sensing measurement instance of the WLAN sensing measurement process, the second trigger frame is not transmitted; if each of all sensing responders includes one UL BW parameter and has the same communication bandwidth as the first trigger frame, the second trigger frame is not transmitted.

**In** an embodiment of the present disclosure, transmitting the second trigger frame includes:
within the transmission opportunity or sensing time window same as the first trigger frame, transmitting the second trigger frame. Being within the target transmission opportunity (TXOP) or target sensing time window means being in a time period corresponding to a same WLAN Sensing Measurement Setup ID together with the first trigger frame.

In an embodiment of the present disclosure, the sensing initiator transmits the polling frame and determines the first resource parameter of the uplink resource of the WLAN sensing measurement process; transmits the first trigger frame and determines the second resource parameter of the sensing responders participating in TF sounding; based on the first resource parameter and/or the second resource parameter, determines whether to transmit a second trigger frame. An embodiment of the present disclosure provides a manner indicating whether to transmit the trigger frame multiple times to perform uplink sensing measurement so as to perfect TB-Based sensing measurement process.

**As** shown in FIG. 9, an embodiment of the present disclosure provides a WLAN sensing measurement method. The method may be applied to an electronic device which may be a sensing responder. The method may include the following steps.

At step 901, a polling frame and a first trigger frame are received.

For the WLAN Sensing architecture and the WLAN Sensing process to which the WLAN sensing measurement method provided by the embodiments of the present disclosure is applied, reference may be made to the first example, and for the TB-Based sensing measurement process, to the second example. No redundant descriptions are made herein.

With a TF trigger stage of a TB-Based scenario as example, the AP as a sensing receiver requests NDP frames from one or more STAs to perform sensing measurement. If at least one STA serving as sensing transmitter makes response in the polling stage, the TF trigger stage is present in the TB-Based sensing measurement instance.

With a sensing initiator AP and a sensing responder STA as example, the AP transmits a polling frame to one or more STAs to wake up all sensing responders participating in sensing measurement; these STAs serve as sensing transmitters and make response in the polling stage of the TB-Based sensing measurement instance to request R2I NDP transmission. After transmitting the polling frame, the sensing initiator determines a first resource parameter of an uplink resource configured for this WLAN sensing measurement process. The first resource parameter includes, for example, the SS number supported by the sensing initiator and the like.

After transmitting the polling frame to wake up the sensing responders participating in the sensing measurement, the sensing initiator transmits a trigger frame, i.e. the first trigger frame, and the sensing responders receive the polling frame and the first trigger frame.

At step 902, a second trigger frame is received. The second trigger frame is determined and transmitted by the sensing initiator based on a first resource parameter and/or a second resource parameter; the first resource parameter is a first resource parameter of an uplink resource for a WLAN sensing measurement process; and the second resource parameter is a second resource parameter of one or more sensing responders participating in TF sounding.

The second trigger frame and the first trigger frame correspond to a same sensing measurement setup identifier. The sensing initiator determines whether to transmit the second trigger frame based on the first resource parameter and/or the second resource parameter. For example, based on an SS number supported by the sensing initiator in the first resource parameter and a sum of SS numbers transmitted by the sensing responders in the second resource parameter, whether to transmit the second trigger frame is determined. The sum of SS numbers transmitted by the sensing responders is a sum of the SS numbers of all sensing responders.

It can be understood that the first trigger frame and the second trigger frame are both trigger frames used to trigger TF sounding; after transmitting the first trigger frame once, the sensing initiator determines whether to transmit the second trigger frame, namely, determines whether to further transmit a trigger frame corresponding to a same WLAN sensing measurement setup identifier (ID) to allocate resources for the sensing responders to perform UL sounding sensing.

Specifically, the sensing initiator may, based on the first resource parameter and/or the second resource parameter, determine whether the uplink resource satisfies the resource requirement of the sensing responders waked up by the polling frame. For example, by the first resource parameter, the number of the sensing responders waked up by the polling frame is determined, and by the second resource parameter, the number of responders participating in sensing measurement is determined. When the number of the sensing responders participating in sensing measurement is less than or equal to the number of the sensing responders waked up by the polling frame, it is determined that the uplink resource does not satisfy the resource requirement of the sensing responders waked up by the polling frame and at this time, the second trigger frame is transmitted to continue the TF sounding process.

In the embodiments of the present disclosure, receiving the second trigger frame includes: within a transmission opportunity or sensing time window same as the first trigger frame, transmitting the second trigger frame, receiving the second trigger frame. Being within the target transmission opportunity (TXOP) or target sensing time window means being in a time period corresponding to a same WLAN sensing measurement setup ID together with the first trigger frame.

**In** the embodiments of the present disclosure, the polling frame and the first trigger frame are received; the second trigger frame is received, where the second trigger frame is determined and transmitted by the sensing initiator based on the first resource parameter and/or the second resource parameter. An embodiment of the present disclosure provides a manner indicating whether to transmit the trigger frame multiple times to perform uplink sensing measurement so as to perfect TB-Based sensing measurement process.

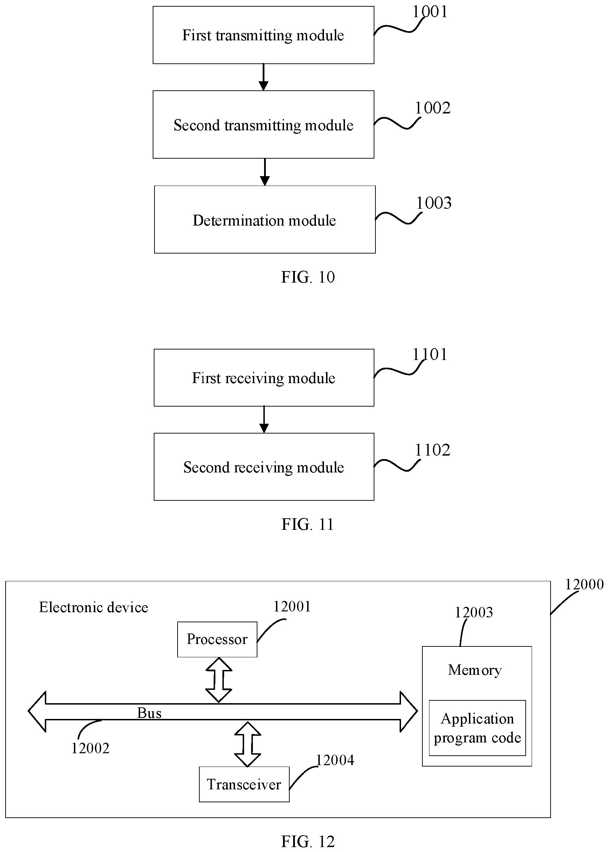

As shown in FIG. 10, based on the same principle as the method provided by the embodiments of the present disclosure, an embodiment of the present disclosure provides an electronic device, which is a sensing initiator. The electronic device includes a first transmitting module 1001, a second transmitting module 1002 and a determination module 1003.

The first transmitting module 1001 is configured to transmit a polling frame and determine a first resource parameter of an uplink resource of a Wireless Local Area Network (WLAN) sensing measurement process.

**The** second transmitting module 1002 is configured to transmit a first trigger frame and determine a second resource parameter of one or more sensing responders participating in TF sounding.

The determination module 1003 is configured to, based on the first resource parameter and/or the second resource parameter, determine whether to transmit a second trigger frame, where the second trigger frame and the first trigger frame correspond to a same sensing measurement setup identifier.

In the embodiments of the present disclosure, the determination module 1003 includes: a first determining sub-module and/or a second determining sub-module.

**The** first determining sub-module is configured to, based on a Spatial Stream (SS) number supported by the sensing initiator in the first resource parameter and a sum of SS numbers transmitted by the one or more sensing responders in the second resource parameter, determine whether to transmit the second trigger frame.

The second determining sub-module is configured to, based on an uplink bandwidth (UL BW) parameter of the sensing responders in the second resource parameter, determine whether to transmit the second trigger frame.

In the embodiments of the present disclosure, the first determining sub-module is configured to:
in response to that the SS number being less than the sum of SS numbers, transmit the second trigger frame;
in response to that the SS number being greater than or equal to the sum of SS numbers, not transmit the second trigger frame.

**In** the embodiments of the present disclosure, the second determining sub-module is configured to, for each of the one or more sensing responders:
based on the UL BW parameter of the sensing responder, in response to determining that the sensing responder includes at least two UL BW parameters in the sensing measurement instance of the WLAN sensing measurement process, transmit the second trigger frame;
based on the UL BW parameter of the sensing responder, in response to determining that the sensing responder includes one UL BW parameter in the sensing measurement instance of the WLAN sensing measurement process, not transmit the second trigger frame.

In 'the embodiments of the present disclosure, transmitting the second trigger frame includes: within a transmission opportunity or sensing time window same as that of the first trigger frame, transmitting the second trigger frame.

In the embodiments of the present disclosure, the first transmitting module 1001 transmits the polling frame and determines the first resource parameter of the uplink resource of the WLAN sensing measurement process; the second transmitting module 1002 transmits the first trigger frame and determines the second resource parameter of the one or more sensing responders participating in TF sounding; the determination module 1003 determines whether to transmit the second trigger frame based on the first resource parameter and/or the second resource parameter.

An embodiment of the present disclosure further provides a WLAN sensing measurement apparatus, which is applied to a sensing initiator. The apparatus includes a first frame transmitting module, a second frame transmitting module and a transmitting-determination module.

The first frame transmitting module is configured to transmit a polling frame and determine a first resource parameter of an uplink resource for a WLAN sensing measurement process.

The second frame transmitting module is configured to transmit a first trigger frame and determine a second resource parameter of sensing responders participating in TF sounding.

The transmitting-determination module is configured to, based on the first resource parameter and/or the second resource parameter, determine whether to transmit a second trigger frame; where the second trigger frame and the first trigger frame correspond to a same sensing measurement setup identifier.

The apparatus further includes other modules in the electronic device in the above embodiments, and no redundant descriptions are made herein.

With reference to FIG. 11, based on the same principle as the method provided by the embodiments of the present disclosure, an embodiment of the present disclosure further provides an electronic device, which is a sensing initiator. The electronic device includes a first receiving module 1101, and a second receiving module 1102.

The first receiving module 1101 is configured to receive a polling frame and a first trigger frame.

The second receiving module 1102 is configured to receive a second trigger frame, where the second trigger frame is determined and transmitted by a sensing initiator based on a first resource parameter and/or a second resource parameter; the first resource parameter is a first resource parameter of an uplink resource for a WLAN sensing measurement process; and the second resource parameter is a second resource parameter of one or more sensing responders participating in TF sounding.

The second trigger frame and the first trigger frame correspond to a same sensing measurement setup identifier.

**In** the embodiments of the present disclosure, the second receiving module is configured to:
within a transmission opportunity or sensing time window same as the first trigger frame, receive the second trigger frame.

In the embodiments of the present disclosure, the first receiving module 1101 receives the polling frame and the first trigger frame; the second receiving module 1102 receives the second trigger frame, where the second trigger frame is determined and transmitted by the sensing initiator based on the first resource parameter and/or the second resource parameter. An embodiment of the present disclosure provides a manner indicating whether to transmit the trigger frame multiple times to perform uplink sensing measurement, so as to perfect TB-Based sensing measurement process.

An embodiment of the present disclosure further provides a WLAN sensing measurement apparatus, which is applied to a sensing responder. The apparatus includes a first frame receiving module and a second frame receiving module.

The first frame receiving module is configured to receive a polling frame and a first trigger frame.

The second frame receiving module is configured to receive a second trigger frame, where the second trigger frame is determined and transmitted by a sensing initiator based on a first resource parameter and/or a second resource parameter; the first resource parameter is a first resource parameter of an uplink resource for a WLAN sensing measurement process; and the second resource parameter is a second resource parameter of one or more sensing responders participating in TF sounding.

The second trigger frame and the first trigger frame correspond to a same sensing measurement setup identifier.

The apparatus also includes other modules of the electronic device in the foregoing embodiments, which will not be repeated herein.

The embodiments of the present disclosure also provide an electronic device, as shown in FIG. 12, the electronic device 12000 may be a server including: a processor 12001 and a memory 12003. The processor 12001 and the memory 12003 are connected, e.g., via a bus 12002. In an embodiment, the electronic device 12000 may also include a transceiver 12004. It will be noted that the transceiver 12004 is not limited to one in number in practical applications, and the structure of the electronic device 12000 does not constitute a limitation of the embodiments of the present disclosure.

The processor 12001 may be a central processing unit (CPU), a general purpose processor, a digital signal processor (DSP), an application specific integrated circuit (ASIC), a field programmable gate array (FPGA) or other programmable logic device, a transistor logic device, a hardware component or any combination thereof. The processor 12001 may implement or perform various illustrative logical blocks, modules, and circuits described in connection with the present disclosure. The processor 12001 may also be a combination for realizing computing functions, for example, including a combination of one or more microprocessor, a combination of digital signal processor (DSP) and microprocessor, etc.

The bus 12002 may include a pathway to transfer information between the foregoing components. The bus 12002 may be a peripheral component interconnect (PCI) bus or an extended industry standard architecture (EISA) bus, and so on. The bus 12002 may include an address bus, a data bus, a control bus, and so on. For ease of representation, only a thick line is shown in FIG. 12, but it does not mean that there is only one bus or one type of bus.

The memory 12003 may be a read only memory (ROM) or other type of static storage device that can store static information and instructions, a random access memory (RAM) or other type of dynamic storage device that can store information and instructions. It can also be an electrically erasable programmable read only memory (EEPROM), a compact disc read only memory (CD-ROM), CD-ROM) or other optical storage (including a compact disc, a laser disc, an optical disc, a digital versatile disc, a Blu-ray disc, etc.), magnetic storage medium or other magnetic storage devices, or any other medium that can be used to carry or store desired program codes in the form of instructions or data structures and can be accessed by a computer, but is not limited thereto.

The memory 12003 is configured to store the application program code for executing the scheme of the present disclosure and is controlled for execution by processor 12001. The processor 12001 is configured to execute the application program code stored in the memory 12003 to implement the foregoing method embodiments.

The electronic device includes, but is not limited to, a mobile terminal such as a cell phone, a laptop computer, a digital broadcast receiver, a personal digital assistant (PDA), a portable android device (PAD), a portable multimedia player (PMP), an on-board terminal (such as an on-board navigation terminal), as well as a stationary terminal (such as a digital TV, a desktop computer), and the like. The electronic device shown in FIG. 12 is only an example, and will not limit to the functions and use scope of the embodiments of the present disclosure.

The server provided by the present disclosure may be an independent physical server, a server cluster or distributed system including a plurality of physical servers, and a cloud server providing basic cloud computing services such as cloud services, cloud databases, cloud computing, cloud functions, cloud storage, network services, cloud communications, middleware services, field name services, security services, CDNs, and big data and artificial intelligence platforms. The terminal can be a smartphone, tablet, laptop, desktop computer, smart speaker, smartwatch, etc., but is not limited to these. The terminal and the server can be directly or indirectly connected through wired or wireless communication, and the present disclosure is not limited herein.

Embodiments of the present disclosure provide a computer-readable storage medium having computer programs stored thereon, which, when run on a computer, cause the computer to execute the corresponding contents of the foregoing method embodiments.

It will be understood that although the individual steps in the flowchart of the accompanying drawings are shown sequentially as indicated by arrows, the steps are not necessarily executed sequentially in the order indicated by the arrows. Unless expressly stated herein, there is no strict order limitation on the execution of these steps, which may be executed in some other order. At least a portion of the steps in the flowchart of the accompanying drawings may include a plurality of sub-steps or a plurality of phases, the sub-steps or phases are not necessarily executed to completion at the same moment but may be executed at different moments, and the order of execution thereof is not necessarily sequential, but may be executed in turn or in alternation with at least a portion of the other steps or sub-steps or phases of the other steps.

It will be noted that the computer-readable medium shown in the present disclosure may be a computer readable signal medium or a computer readable storage medium or any combination thereof. The computer-readable storage medium may be, but is not limited to, an electrical, magnetic, optical, electromagnetic, infrared, or semiconductor system, apparatus, or component, or any combination thereof. More specific examples of the computer readable storage medium may include, but are not limited to: an electrical connection having one or more wires, a portable computer disk, a hard disk, a random access memory (RAM), a read-only memory (ROM), an erasable programmable read only memory (EPROM or a flash memory), an optical fiber, a portable compact disk read-only memory (CD-ROM), an optical storage device, a magnetic storage device, or any suitable combination thereof. In the present disclosure, the computer readable storage medium may be any tangible medium including or storing a program, and the program may be used by or in combination with an instruction execution system, apparatus, or device. In the present disclosure, the computer readable signal medium may be a data signal included in a baseband or propagated as a part of a carrier, in which computer readable program code is carried. This propagated data signal can take many forms, including but not limited to electromagnetic signals, optical signals, or any suitable combination thereof. The computer-readable signal medium may also be any computer-readable medium other than a computer-readable storage medium, and the computer-readable medium may send, propagate, or transmit a program for use by or in combination with an instruction execution system, an apparatus, or a component. The program code contained on the computer-readable medium may be transmitted using any appropriate medium, including but not limited to: wireless, wire, optical cable, RF, etc., or any suitable combination of the foregoing.

The computer-readable medium may be included in the electronic device; or the computer-readable medium may exist independently without being assembled into the electronic device.

The computer-readable medium carries one or more programs, which, when executed by the electronic device, cause the electronic device to perform the method in the embodiments.

According to an aspect of the present disclosure, there is provided a computer program product or computer program including computer instructions which are stored in a computer-readable storage medium. The processor of the computer device reads the computer instructions from a computer-readable storage medium, executes the computer instructions, and causes the computer device to perform the methods provided in the various optional implementations.

A program code for performing the operation of the present disclosure may be written by using any combination of one or more programming languages. The programming language includes an object-oriented programming language such as Java, C++, and a conventional procedural programming language such as a "C" Language or a similar programming language. The program code may be fully executed on a computer of a user or partially executed on a computer of a user, or may be executed as an independent software package, or may be partially executed on a computer of a user and partially executed on a remote computer, or may be fully executed on a remote computer or a server. In case of the remote computer, the remote computer may be connected to the computing device of a user by using any network including a local area network (LAN) or a wide area network (WAN), or may be connected to an external computer (for example, connected to the external computer through the Internet by using an Internet service provider).

Flowcharts and block diagrams in the drawings illustrate architectures, functions, and operations that may be implemented by using the system, the method, and the computer program product according to the various embodiments of the present disclosure. In this regard, each block in the flowchart or the block diagram may represent a module, a program segment, or a part of code. The module, the program segment, or the part of the code includes one or more executable instructions for implementing a specified logical function. It will also be noted that, in some alternative implementations, the functions noted in the blocks may occur in an order different from that noted in the drawings. For example, two blocks shown in succession can actually be executed in parallel, and sometimes they can also be executed in a reverse order, depending on the functions involved. It should also be noted that each block in the block diagrams and/or flowcharts, and combinations of blocks in the block diagrams and/or flowcharts, can be implemented with dedicated hardware-based systems that perform specified functions or operations, or a combination of dedicated hardware and computer instructions.

The modules described in the embodiments of the present disclosure may be implemented in software or hardware. A name of a module does not constitute a limitation on the module itself in some cases. For example, a module A can also be described as a "module A used to perform an operation B".

The above description is only some embodiments of the present disclosure and an explanation of the applied technical principles. Those skilled in the art should understand that the scope of the invention involved in the present disclosure is not limited to a technical solution formed by a specific combination of the above technical features, but should also cover other technical solutions formed by any combination of the above technical features or their equivalents without departing from the inventive concept of the present disclosure. For example, technical solutions formed by replacing the above features with the technical features having similar functions disclosed in (but not limited to) the present disclosure.

## Claims

1. A wireless local area network (WLAN) sensing measurement method, performed by a sensing initiator, and comprising:
transmitting a polling frame and determining a first resource parameter of an uplink resource for a WLAN sensing measurement process;
transmitting a first trigger frame and determining a second resource parameter of one or more sensing responders participating in trigger frame (TF) sounding; and
based on at least one of the first resource parameter or the second resource parameter, determining whether to transmit a second trigger frame, wherein the second trigger frame and the first trigger frame correspond to a same sensing measurement setup identifier.

2. The WLAN sensing measurement method of claim 1, wherein based on at least one of the first resource parameter or the second resource parameter, determining whether to transmit the second trigger frame comprises at least one of:
based on a spatial stream (SS) number supported by the sensing initiator in the first resource parameter and a sum of SS numbers transmitted by the one or more sensing responders in the second resource parameter, determining whether to transmit the second trigger frame; or
based on an uplink bandwidth (UL BW) parameter of each of the one or more sensing responders in the second resource parameter, determining whether to transmit the second trigger frame.

3. The WLAN sensing measurement method of claim 2, wherein based on the SS number supported by the sensing initiator in the first resource parameter and the sum of SS numbers transmitted by the one or more sensing responders in the second resource parameter, determining whether to transmit the second trigger frame comprises:
in response to the SS number being less than the sum of SS numbers, transmitting the second trigger frame;
in response to the SS number being greater than or equal to the sum of SS numbers, not transmitting the second trigger frame.

4. The WLAN sensing measurement method of claim 2, wherein based on the UL BW parameter of each of the one or more sensing responders in the second resource parameter, determining whether to transmit the second trigger frame comprises:
for each of the one or more sensing responders,
based on the UL BW parameter of the sensing responder, in response to determining that the sensing responder comprises at least two UL BW parameters in a sensing measurement instance of the WLAN sensing measurement process, transmitting the second trigger frame;
based on the UL BW parameter of the sensing responder, in response to determining that the sensing responder comprises one UL BW parameter in the sensing measurement instance of the WLAN sensing measurement process, not transmitting the second trigger frame.

5. The WLAN sensing measurement method of claim 3 or 4, wherein transmitting the second trigger frame comprises:
within a transmission opportunity or sensing time window same as that of the first trigger frame, transmitting the second trigger frame.

6. A wireless local area network (WLAN) sensing measurement method, performed by a sensing transmitter, and comprising:
receiving a polling frame and a first trigger frame; and
receiving a second trigger frame, wherein the second trigger frame is determined and transmitted by a sensing initiator based on at least one of a first resource parameter or a second resource parameter, the first resource parameter is a first resource parameter of an uplink resource for a WLAN sensing measurement process, and the second resource parameter is a second resource parameter of one or more sensing responders participating in trigger frame (TF) sounding;
wherein the second trigger frame and the first trigger frame correspond to a same sensing measurement setup identifier.

7. The WLAN sensing measurement method of claim 6, wherein receiving the second trigger frame comprises:
within a transmission opportunity or sensing time window same as that of the first trigger frame, receiving the second trigger frame.

8. An electronic device, being a sensing initiator and comprising:
a first transmitting module, configured to transmit a polling frame and determine a first resource parameter of an uplink resource for a WLAN sensing measurement process;
a second transmitting module, configured to transmit a first trigger frame and determine a second resource parameter of one or more sensing responders participating in trigger frame (TF) sounding; and
a determination module, configured to, based on at least one of the first resource parameter or the second resource parameter, determine whether to transmit a second trigger frame, wherein the second trigger frame and the first trigger frame correspond to a same sensing measurement setup identifier.

9. An electronic device, being a sensing responder, and comprising:
a first receiving module, configured to receive a polling frame and a first trigger frame; and
a second receiving module, configured to receive a second trigger frame, wherein the second trigger frame is determined and transmitted by a sensing initiator based on at least one of a first resource parameter or a second resource parameter, the first resource parameter is a first resource parameter of an uplink resource for a WLAN sensing measurement process, and the second resource parameter is a second resource parameter of one or more sensing responders participating in trigger frame (TF) sounding;
wherein the second trigger frame and the first trigger frame correspond to a same sensing measurement setup identifier.

10. An electronic device, comprising a processor and a memory storing computer programs executable by the processor; wherein the computer programs, when executed by the processor, cause the processor to perform the WLAN sensing measurement method of any one of claims 1 to 8.
